(19) **Europäisches Patentamt**
**European Patent Office**
**Office européen des brevets**

(11) **EP 2 874 788 B1**

(12) **EUROPÄISCHE PATENTSCHRIFT**

(45) Veröffentlichungstag und Bekanntmachung des Hinweises auf die Patenterteilung:
**28.10.2020 Patentblatt 2020/44**

(21) Anmeldenummer: **13734666.4**

(22) Anmeldetag: **04.07.2013**

(51) Int Cl.:
**B25J 9/16** (2006.01)

(86) Internationale Anmeldenummer:
**PCT/EP2013/001971**

(87) Internationale Veröffentlichungsnummer:
**WO 2014/012628 (23.01.2014 Gazette 2014/04)**

(54) **MESSGERÄT**

MEASURING DEVICE

DISPOSITIF DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2012 DE 102012014312**

(43) Veröffentlichungstag der Anmeldung:
**27.05.2015 Patentblatt 2015/22**

(73) Patentinhaber: **KUKA Deutschland GmbH**
**86165 Augsburg (DE)**

(72) Erfinder:
• **TSCHARNUTER, Dietmar**
**86316 Friedberg (DE)**
• **ROTH, Stefan**
**86485 Eisenbrechtshofen (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
WO-A2-2008/107715    US-A- 4 621 926
US-A1- 2010 017 178

• **BLANK S ET AL: "High precision PSD guided robot localization: Design, mapping, and position control", INTELLIGENT ROBOTS AND SYSTEMS, 2007. IROS 2007. IEEE/RSJ INTERNATIONAL CONFERENCE ON, IEEE, PISCATAWAY, NJ, USA, 29. Oktober 2007 (2007-10-29), Seiten 52-57, XP031222620, ISBN: 978-1-4244-0911-2**
• **LIN QI ET AL: "6 DOF long-range precision tracking system", SYSTEMS, MAN AND CYBERNETICS, 2004 IEEE INTERNATIONAL CONFERENCE ON, IEEE, PISCATAWAY, NJ, USA, Bd. 6, 10. Oktober 2004 (2004-10-10), Seiten 5307-5311, XP010772841, ISBN: 978-0-7803-8566-5**
• **ZHUANG H ET AL: "Calibration of multi-beam laser tracking systems", ROBOTICS AND COMPUTER INTEGRATED MANUFACTURING, ELSEVIER SCIENCE PUBLISHERS BV., BARKING, GB, Bd. 19, Nr. 4, 1. August 2003 (2003-08-01) , Seiten 301-314, XP004431046, ISSN: 0736-5845, DOI: 10.1016/S0736-5845(02)00076-5**
• **Anonymous: "Opticell - CogniTens - Fully automated 3D optical measurement system", , 4 August 2008 (2008-08-04), XP055485913, Retrieved from the Internet: URL:https://static.aminer.org/pdf/PDF/000/ 315/493/stereo_vision_sensor_for_d_measure ments_a_complete_solution_to.pdf[retrieved on 2018-06-19]**

**EP 2 874 788 B1**

**Beschreibung**

Die vorliegende Erfindung betrifft ein Messgerät, eine robotergeführte Messanordnung mit dem Messgerät sowie ein Verfahren zur dynamischen 6D-Vermessung eines Roboters und ein Verfahren zur Kalibrierung einer solchen Messanordnung.

Aus verschiedenen Gründen werden Roboter vorab oder im Betrieb sechsdimensional vermessen: so kann hiermit beispielsweise eine Positioniergenauigkeit überprüft, eine Temperaturdrift, eine Elastizität und/oder ein Verschleiß kompensiert oder eine Roboter-, insbesondere Gelenkantriebssteuerung kalibriert werden. Zur kompakteren Darstellung wird vorliegend auch eine Regelung verallgemeinernd als Steuerung bezeichnet. Wird nur ein Teilabschnitt eines Regelkreises betrachtet, so steuert in einer Ausführung ein, vorzugsweise vorgelagertes, Sendermodul ein, vorzugsweise nachfolgendes Empfängermodul. Ergibt sich aus einer Anordnung von Sender-Empfängerstrecken ein Kreis zur optimierten Minimierung einer Sollwertabweichung, ist insbesondere dies eine Regelung im Sinne der vorliegenden Erfindung.

Unter einem sechsdimensionalen ("6D") Vermessen wird vorliegend insbesondere die Bestimmung einer dreidimensionalen Lage, insbesondere eines Ortsvektors *a,* vorzugsweise in einem kartesischen, Zylinder- oder Kugelkoordinatensystem, und einer dreidimensionalen Orientierung, insbesondere der Kardan- oder Eulerwinkel $(\psi, \theta, \varphi)$, eines roboterfesten Referenzkoordinatensystems, beispielsweise des TCPs, relativ zu einem roboterbasis- bzw. -umgebungsfesten Koordinatensystem verstanden. Eine solche 6D-Vermessung kann insbesondere eine sogenannte erweiterte Transformationsmatrix, eine Denavit-Hartenberg-Matrix oder dergleichen liefern, etwa in der Form

$$\boldsymbol{T} \in \Re^{4 \times 4} \quad = \quad \begin{bmatrix} \boldsymbol{A}(\psi, \theta, \varphi) \in \Re^{3 \times 3} & \boldsymbol{a} \in \Re^{3 \times 1} \\ \boldsymbol{0} \in \Re^{1 \times 3} & 1 \end{bmatrix},$$

Natürlich kann die Lage und Orientierung eines roboterfesten Referenzkoordinatensystems gleichermaßen durch Quaternionen oder dergleichen beschrieben werden, insofern ist die oben genannte Matrix nur ein Beispiel für eine Transformation zwischen einem roboter- und einem umgebungsfesten Koordinatensystem.

Zur Vermessung von Robotern werden in betriebsinterner Praxis sogenannte Lasertracker benutzt. Diese erfassen laserinterferometrisch eine dreidimensionale Position eines passiven Markers. Indem nacheinander drei nicht kollineare Marker erfasst werden, kann auch die Orientierung eines durch diese Marker definierten Referenzkoordinatensystems bestimmt werden.

Nachteilig verfälscht jedoch eine Relativbewegung zwischen Markeranordnung und Lasertracker während der sequentiellen Erfassung der verschiedenen Marker das Messergebnis. Dies wird insbesondere bei schnellen bzw. dynamischen Roboterbewegungen relevant: bewegt sich beispielsweise ein Roboter, der einen markerbestückten Referenzkörper trägt, während der Lasertracker nacheinander dessen Marker erfasst, ergeben sich falsche Relativpositionen der Marker zueinander, was eine dynamische 6D-Vermessung erschwert, teilweise unmöglich macht. Unter einer dynamischen Messung wird vorliegend insbesondere eine Vermessung während einer Bewegung des Roboters verstanden.

Die WO 2008/107715 A2 betrifft ein Verfahren zum Vermessen eines Roboters. Ziel ist es, Vermessungsungenauigkeiten, welche insbesondere dadurch bedingt sind, dass der Vermessungssensor von der Roboterstruktur verdeckt ist, zu vermeiden. Des Weiteren soll eine Verwendung komplizierter mathematischer Modelle umgangen werden. Dazu wird vorgeschlagen Positionssensoren, zum Beispiel Kameras, an der Roboterstruktur zu befestigen. Weiterhin wird vorgeschlagen, Marker, welche durch die Kameras beobachtbar sind, ebenfalls an der Roboterstruktur, insbesondere in der Nähe der Hand, anzubringen. Die Marker können insbesondere an einem Ring um die Roboterhand befestigt werden. Des Weiteren wird vorgeschlagen, um die Basis des Roboters ebenfalls eine ringförmige Struktur anzubringen. Auf dieser Struktur befinden sich ebenfalls verschiedene Marker, welche durch die am Roboter befestigten Kameras beobachtet werden können.

Die US 4,621,926 betrifft ein interferometrisches System zur Steuerung einer nichtrechtwinkeligen Bewegung eines Objektes, z.B. eines Roboters. Dazu wird zunächst ein Portalroboter beschrieben, der zwischen Werkzeugspitze und Roboterhand einen Körper für die Aufnahme von Reflektionsmarkern aufweist. Darüber hinaus wird offenbart, die Reflektionsmarker mit einem externen Vermessungsgerät zur Vermessung der Roboterposition anzuvisieren. Das externe Vermessungsgerät kann mehrere Laserinterferometer umfassen, insbesondere drei oder sechs. Spiegel zur Ablenkung der Laserstrahlen können dabei kardanisch aufgehangen sein, d.h. in zwei unabhängigen Achsen zueinander beweglich.

Die US 2010/0017178 A1 offenbart ein System zur Erzeugung eines digitalen Modells wenigstens eines Teils eines Objektes. Ein zu einem lokalen Koordinatensystem referenziertes initiales digitales Modell wird unter Verwendung einer optischen Vorrichtung zur Verfügung gestellt, welche eine Mehrzahl visuell exponierter optischer Marker an bekannten Orten aufweist. Der Ort der optischen Vorrichtung wird basierend auf den relativen Orten der Marker zueinander, wie sie vom Standpunkt einer externen Kameraanordnung erscheinen, bestimmt. Der Standpunkt ist an einem in einem globalen Koordinatensystem bekannten Ort. Ein transformiertes digitales Modell wird generiert, das den entsprechenden Teil repräsentiert und zu dem globalen Koordinatensystem referenziert ist, basierend auf einem Modifizieren des initialen digitalen Modells entsprechend dem Ort der optischen Vorrichtung.

Aufgabe der vorliegenden Erfindung ist es, ein Vermessen eines Roboters zu verbessern.

Diese Aufgabe wird durch ein Messgerät mit den Merkmalen des Anspruchs 1 gelöst. Ansprüche 6, 8 bzw. 10 stellen eine robotergeführte Messanordnung mit einem hier beschriebenen Messgerät, ein Verfahren zur dynamischen 6D-Vermessung eines Roboters mittels einer solchen Anordnung bzw. ein Verfahren zur Kalibrierung einer solchen Messanordnung unter Schutz. Die Unteransprüche betreffen vorteilhafte Weiterbildungen.

Gemäß einem Aspekt der vorliegenden Erfindung weist eine robotergeführte Messanordnung ein Messgerät auf, das drei oder mehr Erfassungsmittel und ein gemeinsames Steuermittel zum Steuern dieser Erfassungsmittel aufweist. Des Weiteren weist die Messanordnung einen Referenzkörper mit drei oder mehr nicht kollinearen, durch die Erfassungsmitteln erfassbaren passiven Markern und einen Roboter auf, der das Messgerät oder den Referenzkörper führt. Insbesondere kann einer von dem Referenzkörper und dem Messgerät dauerhaft oder zerstörungsfrei lösbar an dem Roboter befestigt bzw. befestigbar sein, wobei der andere von dem Referenzkörper und dem Messgerät in einer Roboterumgebung, insbesondere an einer Roboterbasis, in einer Roboterzelle oder dergleichen angeordnet bzw. gelagert sein kann. Der Roboter weist in einer Ausführung sechs oder mehr Freiheitsgrade, insbesondere Drehfreiheitsgrade bzw. -gelenke, auf. In einer anderen Ausführung weist der Roboter höchstens, insbesondere genau, drei oder vier Freiheitsgrade auf.

Die Erfassungsmittel sind zur, insbesondere optischen, Erfassung der Position bzw. Lage von passiven Markern eingerichtet. Unter einem passiven Marker wird vorliegend insbesondere ein energieloser Marker bzw. eine energielose Markierung verstanden, der bzw. die eine, insbesondere optische, Strahlung, die von einem Erfassungsmittel ausgestrahlt wird, vorzugsweise gerichtet, an das Erfassungsmittel zurückstrahlt bzw. reflektiert. Die Erfassungsmittel können entsprechend insbesondere ein optisches Sende- und/oder Empfangsmittel, insbesondere einen Lasertracker, aufweisen.

Die Erfassungsmittel sind in einem ein- oder mehrteiligen gemeinsamen Gehäuse des Messgeräts um mehrere, vorzugsweise wenigstens zwei, Achsen drehbar gelagert und um diese Achsen, insbesondere (elektro)motorisch, aktuier- bzw. verstellbar. Wenigstens zwei Erfassungsmittel sind 2D-kardanisch in dem Gehäuse drehbar. Hierunter wird insbesondere verstanden, dass ein Rahmen bzw. Gehäuse eines Erfassungsmittels um eine erste Achse relativ zu dem gemeinsamen Gehäuse des Messgeräts drehbar ist, und ein optisches Sende- und/oder Empfangsmittel dieses Erfassungsmittels seinerseits, insbesondere unabhängig, um eine zweite Achse relativ zu diesem Rahmen bzw. Gehäuse des Erfassungsmittels drehbar ist.

Wenigstens ein drittes Erfassungsmittel kann ebenfalls 2D-kardanisch in dem gemeinsamen Gehäuse des Messgeräts drehbar sein, wobei dieses gemeinsame Gehäuse dann seinerseits fest bzw. unbeweglich, insbesondere auf einem Stativ, in der Umgebung bzw. an dem Roboter gelagert bzw. angeordnet sein kann.

Gleichermaßen kann das gemeinsame Gehäuse des Messgeräts um eine oder mehrere Gehäusedrehachsen gegen eine Gehäuselagerung drehbar sein, die ihrerseits fest bzw. unbeweglich in der Umgebung bzw. an dem Roboter gelagert bzw. angeordnet sein kann. Insbesondere dann kann ein drittes Erfassungsmittel 1D-kardanisch in dem gemeinsamen Gehäuse des Messgeräts drehbar sein, d.h. um nur eine Achse in dem Gehäuse drehbar gelagert und um diese Achse auch, insbesondere (elektro)motorisch aktuier- bzw. verstellbar.

Ein Messgerät mit wenigstens zwei 2D-kardanischen und wenigstens einem 1D-kardanischen Erfassungsmittel kann insbesondere den Vorteil aufweisen, dass die 2D-kardanischen Erfassungsmittel zusammen mit einer Drehung des gemeinsamen Gehäuses des Messgerätes zur Positionierung des 1D-kardanischen Erfassungsmittels mitbewegt und so vorpositioniert bzw. -orientiert werden. Zudem wird eine Kaskadierung von Messfehlern zwischen den 2D-kardanischen Erfassungsmitteln und dem 1D-kardanischen Erfassungsmittel reduziert bzw. vermieden.

Ein Messgerät mit wenigstens drei 2D-kardanischen Erfassungsmitteln kann demgegenüber insbesondere den Vorteil aufweisen, dass die drei Erfassungsmittel unabhängig voneinander und insbesondere aufgrund ihrer Trägheit schneller als das gemeinsame Gehäuse positioniert bzw. auf den Referenzkörper und dessen Marker ausgerichtet werden können.

Durch wenigstens einen, vorzugsweise unlimitierten, Drehfreiheitsgrad des gemeinsamen Gehäuses des Messgerätes kann, insbesondere auch bei wenigstens drei 2D-kardanischen Erfassungsmitteln, der Vorteil erreicht werden, dass ein Erfassungsraum des Messgeräts nicht durch den, meist konstruktiv begrenzten, Dreh- bzw. Erfassungsraum der Erfassungsmittel limitiert ist. Um diesen Erfassungsraum zu erweitern, kann das gemeinsame Gehäuses des Messgerätes auch träger bzw. langsamer verstellen als die Erfassungsmittel selber relativ zu diesem Gehäuse. Kann beispielsweise ein Erfassungsmittel (schneller) um etwa 90° relativ zu dem gemeinsamen Gehäuse des Messgerätes verschwenken, kann durch (langsamere) Drehung des Gehäuses, vorzugsweise unlimitiert bzw. um wenigstens 360°, trotzdem der gesamte Raum erfasst werden.

Wenigstens zwei, insbesondere drei Erfassungsmittel eines stationären bzw. in einer Roboterumgebung fest oder drehbar gelagerten Messgeräts können in dem gemeinsamen Gehäuse, insbesondere horizontal, neben- oder, insbesondere vertikal, übereinander angeordnet sein. Insbesondere kann eine Drehachse eines Erfassungsmittels, vorzugsweise eine erste Drehachse eines 2D-kardanischen Erfassungsmittels parallel neben einer Drehachse eines weiteren Erfassungsmittels, vorzugsweise einer ersten Drehachse eines weiteren 2D-kardanischen Erfassungsmittels, und/oder parallel neben einer Drehachse eines anderen weiteren Erfassungsmittels, vorzugsweise einer Drehachse eines 1D-kardanischen Erfassungsmittels oder einer ersten Drehachse eines anderen weiteren 2D-kardanischen Erfassungsmittels, angeordnet sein, wobei die zweiten Drehachsen 2D-kardanischer Erfassungsmittel vorzugsweise in einer Winkelstellung der ersten Drehachsen miteinander fluchten können. Gleichermaßen kann eine Drehachse eines Erfassungsmittels, vorzugsweise eine erste Drehachse eines 2D-kardanischen Erfassungsmittels mit einer Drehachse eines weiteren Erfassungsmittels, vorzugsweise einer ersten Drehachse eines weiteren 2D-kardanischen Erfassungsmittels fluchten, und/oder mit einer Drehachse eines anderen weiteren Erfassungsmittels, vorzugsweise einer Drehachse eines 1D-kardanischen Erfassungsmittels oder einer ersten Drehachse eines anderen weiteren 2D-kardanischen Erfassungsmittels, fluchten.

Zusätzlich oder alternativ kann eine Drehachse eines Erfassungsmittels, vorzugsweise eine zweite Drehachse eines 2D-kardanischen Erfassungsmittels oder eine Drehachse eines 1D-kardanischen Erfassungsmittels, senkrecht zu einer Gehäusedrehachse des gemeinsamen Gehäuses des Messgeräts orientiert sein, um die das gemeinsame Gehäuse gegen eine Gehäuselagerung drehbar ist.

Durch drei solche 2D-kardanischen Erfassungsmittel bzw. zwei solche 2D-kardanische Erfassungsmittel und ein 1D-kardanisches Erfassungsmittel in einem gemeinsamen Gehäuse, das um wenigstens eine Gehäusedrehachse gegen eine Gehäuselagerung drehbar ist, können vorteilhaft gleichzeitig bzw. simultan drei passive Marker des Referenzkörpers erfasst und so der Roboter dynamisch bzw. während der Bewegung sechsdimensional vermessen werden. Unter einem simultanen bzw. gleichzeitigen Erfassen wird vorliegend insbesondere verstanden, dass zu wenigstens im Wesentlichen einem Messzeitpunkt je wenigstens drei Erfassungsmittel des Messgeräts je einen passiven Marker des Referenzkörpers erfassen. Der gemeinsame Messzeitpunkt kann insbesondere dadurch gewährleistet werden, dass in einer Ausführung das gemeinsame Steuermittel eine einzige Verarbeitungs-, insbesondere Rechnereinheit, insbesondere einen Controller, zum, vorzugsweise (voll)synchronen, Steuern der Erfassungsmittel und in einer Weiterbildung gegebenenfalls des bzw. der Drehfreiheitsgrade des gemeinsamen Gehäuses des Messgeräts aufweist. Hierdurch können insbesondere Ungenauigkeiten aufgrund unterschiedlicher Signallaufzeiten reduziert werden. In einer Ausführung sind Mess- bzw. Samplezeitpunkte, an denen Meßwerte der Erfassungsmittel, insbesondere der Lasertracker, vorliegen, wenigstens im Wesentlichen, gleich.

Insbesondere hierdurch wird es vorteilhaft möglich, Roboter dynamisch sechsdimensional mit einer Taktrate von über 500 Hz, vorzugsweise von 1 kHz oder mehr zu vermessen, d.h. zu Messzeitpunkten, die höchstens um 2 ms, insbesondere um höchstens 1ms auseinanderliegen.

Die drei Erfassungsmittel erfassen in einer Ausführung jeweils eine Position bzw. Lage eines passiven Markers in ihrem Referenzkoordinatensystem. Diese Positionen können bei Kenntnis der Transformationen zwischen den Referenzkoordinatensystemen der Erfassungsmittel ineinander überführt werden. Auf diese Weise können die Positionen der drei passiven Marker, die diese zum selben Messzeitpunkt aufweisen, in einem gemeinsamen Referenzkoordinatensystem, beispielsweise eines kardanischen, insbesondere 1D- oder 2D-kardanischen, Erfassungsmittels, dargestellt und so die Transformation bzw. Lage und Orientierung zwischen diesem Erfassungsmittel und dem Referenzkörper bzw. dessen, vorzugsweise vorab relativ zueinander vermessenen, passiven Markern ermittelt werden.

Insbesondere, um die Transformationen zwischen den Referenzkoordinatensystemen der Erfassungsmittel zu bestimmen, kann nach einem Aspekt der vorliegenden Erfindung die Messanordnung kalibriert werden. Hierzu erfassen in einer Ausführung wenigstens drei Erfassungsmittel des Messgeräts je wenigstens drei passive Marker des Referenzkörpers, wobei es prinzipiell auch genügen kann, durch ein Erfassungsmittel die dreidimensionale Lage eines passiven Markers, eine zweidimensionale Lage eines weiteren passiven Markers sowie eine eindimensionale Lage, insbesondere eine Entfernung, eines anderen weiteren passiven Markers zu erfassen. Werden hingegen jeweils die dreidimensionalen Lagen der drei passiven Marker erfasst, beispielsweise Entfernung zu einem optischen Sende- und/oder Empfangsmittel sowie dessen (Dreh)freiheitsgrade relativ zu dem gemeinsamen Gehäuse oder einem anderen Erfassungsmittel, kann diese Redundanz zum Fehlerausgleich, insbesondere durch Mittelung der Messwerte, genutzt werden.

Sind die Lagen dreier Marker und damit auch die Orientierung eines durch diese definierten Referenzkoordinatensystems in den Referenzkoordinatensystemen der diese erfassenden Erfassungsmittel bekannt, kann hieraus die Transformation zwischen diesen Erfassungsmitteln bestimmt bzw. ermittelt werden.

Diese Kalibrierung kann in einer Weiterbildung anschließend überprüft und gegebenenfalls korrigiert werden, indem zwei oder mehr Erfassungsmittel des Messgeräts jeweils denselben passiven Marker erfassen und seine Position in einem Referenzkoordinatensystem eines Erfassungsmittels in das Referenzkoordinatensystem des anderen Erfassungsmittels überführt wird.

Der Referenzkörper ist in einer Ausführung derart mit Markern bestückt, dass aus jeder Raumrichtung wenigstens drei Marker sichtbar sind. Dies kann beispielsweise durch Bestückung aller Flächen eines, vorzugsweise regelmäßigen, Polyeders, insbesondere eines Quaders, mit je einem, vorzugsweise mit wenigstens drei Markern, oder durch Bestückung von zwei einander schneidenden Großkreisen eines kugelförmigen Referenzkörpers mit je wenigstens drei Markern erreicht werden. Die passiven Marker können insbesondere durch eine lokale Beschichtung des Referenzkörpers oder die Befestigung von, vorzugsweise erhabenen, insbesondere halbkugelförmigen, Markerkörperchen, an dem Referenzkörper ausgebildet werden.

Weitere Vorteile und Merkmale ergeben sich aus den Unteransprüchen und den Ausführungsbeispielen. Hierzu zeigt, teilweise schematisiert:

Fig. 1: eine robotergeführte Messanordnung nach einer Ausführung der vorliegenden Erfindung;

Fig. 2: ein Messgerät nach einer weiteren Ausführung der vorliegenden Erfindung in Fig. 1 entsprechender Darstellung;

Fig. 3: ein Kalibrier(prüf)verfahren nach einer Ausführung der vorliegenden Erfindung; und

Fig. 4: ein Verfahren zur dynamischen 6D-Messung eines Roboters nach einer Ausführung der vorliegenden Erfindung.

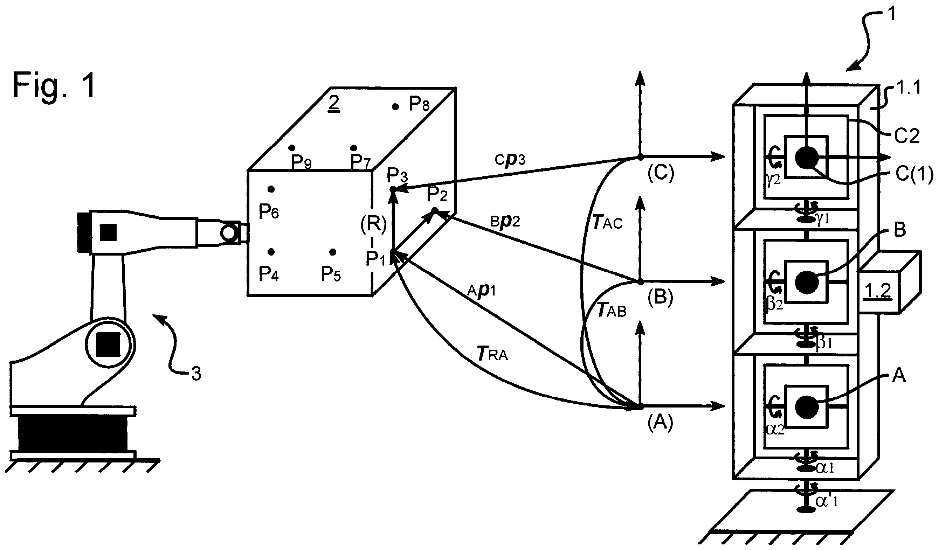

Fig. 1 zeigt eine robotergeführte Messanordnung nach einer Ausführung der vorliegenden Erfindung mit einem Messgerät 1, das in einer Roboterumgebung, beispielsweise in einer stationären Roboterzelle oder auf einer beweglichen Plattform, gelagert ist, und mit einem Referenzkörper 2, der von einem Roboter 3 geführt wird. Der Referenzkörper 2 kann dauerhaft oder lösbar, insbesondere nur zur Vermessung, mit dem Roboter 3 verbunden sein. Diese Anordnung ist nur exemplarisch, insbesondere kann umgekehrt das Messgerät 1 dauerhaft oder lösbar mit dem Roboter 3 verbunden und der Referenzkörper 2 in einer Roboterumgebung gelagert sein.

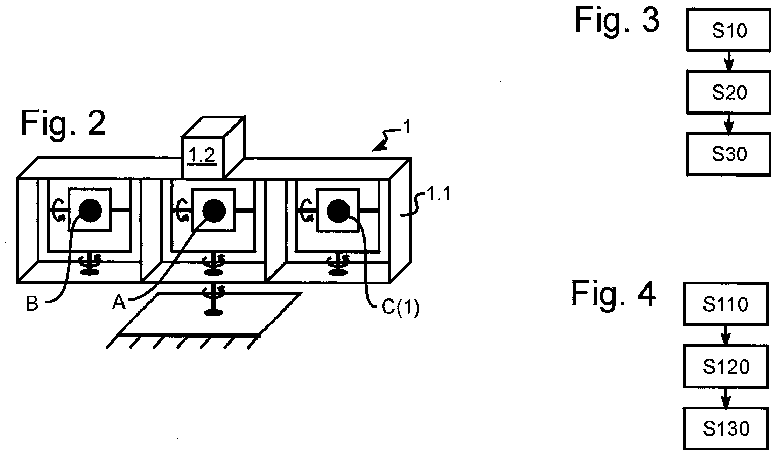

Das Messgerät 1 weist ein Gehäuse 1.1 auf. Dies ist in Fig. 1, 2 rein exemplarisch kastenförmig dargestellt, kann in einer bevorzugten Ausführung jedoch, wenigstens im Wesentlichen, zylindrisch und/oder rotationssymmetrisch zu einer der nachfolgend erläuterten Drehachse ausgebildet sein.

In dem Gehäuse 1.1 sind drei Messeinheiten angeordnet. Diese weisen jeweils ein optisches Erfassungsmittel in Form eines Lasertrackers A, B, C auf. Die drei Lasertracker sind bis auf nachfolgend erläuterte Unterschiede gleich aufgebaut, so dass nachfolgend stellvertretend nur der Lasertracker C erläutert und bezüglich der beiden anderen hierauf Bezug genommen wird.

Der Lasertracker C weist eine optische Sende- und/oder Empfangseinrichtung C1 auf. Diese ist um eine in Fig. 1, 2 fett ausgezogene zweite Achse drehbar in einem Rahmen C2 angeordnet, was in Fig. 1 durch die Koordinate $\gamma_2$ bzw. $\alpha_2$, $\beta_2$ für die Lasertracker A, B angedeutet ist. Der Rahmen C2 ist seinerseits um eine in Fig. 1, 2 fett ausgezogene erste Achse drehbar in dem Gehäuse 1.1 angeordnet, was in Fig. 1 durch die Koordinate $\gamma_1$ bzw. $\alpha_1$, $\beta_1$ für die Lasertracker A, B angedeutet ist. Der Rahmen C2 ist wiederum rein exemplarisch kastenförmig dargestellt, kann in einer bevorzugten Ausführung jedoch auch andere Konturen aufweisen, insbesondere wenigstens im Wesentlichen einen kreuzförmigen Querschnitt, dessen Balken mit den beiden Drehachsen fluchten können. Die Lasertracker A, B und C sind somit jeweils 2D-kardanisch in dem Gehäuse 1.1 gelagert.

Die drei ersten Achsen fluchten miteinander. Zusätzlich oder alternativ zu der drehbaren Anordnung eines Rahmens, insbesondere des Rahmens des Lasertrackers A, im Gehäuse 1.1, kann das Gehäuse 1.1 um eine, insbesondere mit den ersten Achsen der anderen Lasertracker B, C fluchtende, in Fig. 1, 2 fett ausgezogene Achse drehbar in der Roboterumgebung gelagert sein, was in Fig. 1 durch die Koordinate $\alpha'_1$ angedeutet ist. In Fig. 1 sind beide Ausführungen gemeinsam dargestellt, wie erläutert, kann der Freiheitsgrad $\alpha_1$ oder $\alpha'_1$ auch entfallen. Zur kompakteren Darstellung werden nachfolgend beide Freiheitsgrade notiert, bei Wegfall kann der entsprechende Wert als konstant betrachtet werden, z.B. $\alpha_1 = 0$ oder $\alpha'_1 = 0$.

Am Gehäuse 1.1 ist ein gemeinsames Steuermittel in Form eines Controllers 1.2 des Messgerätes 1 angeordnet, der die Bewegung $\alpha_1$, $\alpha_2$,..., $\gamma_2$ der drei Lasertracker A, B, C und gegebenenfalls $\alpha'_1$ des Gehäuses steuert und die Erfassung durch die optischen Sende- und/oder Empfangseinrichtungen gemeinsam steuert und verarbeitet, insbesondere auswertet.

Fig. 2 zeigt ein Messgerät nach einer weiteren Ausführung der vorliegenden Erfindung in Fig. 1 entsprechender Darstellung. Nachfolgend wird nur auf die Unterschiede eingegangen und im Übrigen Bezug auf die Beschreibung der Ausführung nach Fig. 1 genommen.

Während in Fig. 1 das Messgerät 1, bezogen auf die ersten Achsen seiner Lasertracker und/oder die Drehachse des Gehäuses, vertikal in der Roboterumgebung angeordnet ist, ist das Messgerät 1 der Fig. 2 horizontal angeordnet. Insbesondere sind hier die im Bezug auf die Umgebung ebenfalls vertikalen ersten Drehachsen der Lasertracker A, B und C parallel nebeneinander angeordnet, die zweiten, horizontalen Drehachsen können miteinander fluchten. Wiederum ist auch ein Drehfreiheitsgrad des Gehäuses 1.1 gegen die Roboterumgebung um eine, vorzugsweise vertikale, Achse eingezeichnet, der zusätzlich oder alternativ zu einem Drehfreiheitsgrad um die erste Achse eines, insbesondere des mittleren Lasertrackers A vorgesehen sein kann. Die Drehachse $\alpha'_1$ kann in einer Abwandlung auch horizontal angeordnet sein.

Die Lasertracker A, B, C definieren jeweils, insbesondere durch eine optische Achse ihrer optischen Sende- und/oder Empfangseinrichtung, ein lokales Koordinatensystem (A), (B) bzw. (C), welche in Fig. 1 links neben dem Messgerät 1 dargestellt sind, und auf die in der nachfolgenden Beschreibung zur kompakteren Darstellung Bezug genommen wird. Die Orientierung der Lasertracker A, B und C bzw. der Koordinatensysteme (A), (B) und (C) gegenüber dem Gehäuse 1.1 wird durch deren Freiheitsgrade $\alpha_1,..., \gamma_2$ beschrieben. Entsprechend wird eine Transformation T zwischen zwei lokalen Koordinatensystemen durch deren Freiheitsgrade bestimmt:

$$T_{AB} = T_{AB}(\alpha_1, \alpha_2, \beta_1, \beta_2, \text{Offset}),$$

$$T_{AC} = T_{AC}(\alpha_1, \alpha_2, \gamma_1, \gamma_2, \text{Offset}),$$

wobei die Transformation $T_{UV}$ die Transformation vom System V $\in$ {(A), (B), (C)} in das System U $\in$ {(A), (B), (C)} beschreibt, insbesondere einen Versatz und/oder eine Verdrehung. Die Transformation T kann beispielsweise durch eine sogenannte erweiterte Transformationsmatrix, eine Denavit-Hartenberg-Matrix oder dergleichen beschrieben sein. Offset kann insbesondere einen Versatz von Ursprüngen der Koordinatensysteme gegeneinander beschreiben.

Der robotergeführte Referenzkörper 2 weist eine Menge von Referenzmarkern auf, von denen in Fig. 1 neun Marker $P_1,...,P_9$ sichtbar sind. Der Referenzkörper 2 ist rein exemplarisch kastenförmig dargestellt, kann in einer bevorzugten Ausführung jedoch auch andere Konturen aufweisen, insbesondere eine rotationssymmetrische, vorzugsweise kugelförmige, Gestalt.

Um eine Vermessung des Roboters durchzuführen, sind vorab die Positionen der Marker relativ zueinander zu vermessen, sie können beispielsweise, wie in Fig. 1 rein exemplarisch angedeutet, als Punkte $P_1,...,P_9$ in einem referenzkörperfesten Koordinatensystem (R) bekannt sein. Die Marker sind auf dem Referenzkörper 2 so angeordnet, dass stets wenigstens drei von ihnen gleichzeitig aus jeder Raumrichtung sichtbar sind. Insbesondere können die Marker gemäß einer homogenen Gitterstruktur verteilt sein, so dass je drei benachbarte Marker stets dieselbe relative Lage zueinander aufweisen.

Eine Erfassung eines Markes durch einen Lasertracker ist in Fig. 1 durch einen entsprechenden Vektorpfeil angedeutet. Exemplarisch ist die vom Lasertracker A in dessen lokalem Koordinatensystem (A) erfasste Position $_A p_1$ des Markers $P_1$, die vom Lasertracker B in dessen lokalem Koordinatensystem (B) erfasste Position $_B p_2$ des Markers $P_2$ und die vom Lasertracker C in dessen lokalem Koordinatensystem (C) erfasste Position $_C p_3$ des Markers $P_3$ eingezeichnet.

Nachfolgend wird zunächst anhand der Fig. 3 ein Kalibrier(prüf)verfahren beschrieben, wie es mittels der Messanordnung, insbesondere durch den Controller 1.2 durchgeführt wird:

Hierzu wird ein stationärer Referenzkörper mit wenigstens drei nicht kollinearen Markern verwendet, beispielsweise der Referenzkörper 2 mit den Markern $P_1$ bis $P_3$. Diese müssen jedoch zur Kalibrierung nicht notwendigerweise vermessen sein.

In einem ersten Schritt S10 werden von den drei Lasertrackern A, B, C nacheinander, d.h. zu verschiedenen Messzeitpunkten $t_{Ki}$, die gleichen drei Marker erfasst, wobei die drei Lasertracker jeweils zur gleichen Zeit unterschiedliche Marker erfassen können:

$$_A p_1(t_{K1}), \; _A p_2(t_{K2}), \; _A p_3(t_{K3}),$$

$$_B p_1(t_{K2}), \; _B p_2(t_{K3}), \; _B p_3(t_{K1}),$$

$$_C p_1(t_{K3}), \; _C p_2(t_{K1}), \; _C p_3(t_{K2}).$$

Eine Transformation zwischen einem lokalen Koordinatensystem (A), (B) bzw. (C) bzw. einem Lasertracker und einem Referenzkoordinatensystem (R) bzw. -körper wird durch drei erfasste Marker eindeutig bestimmt, wobei eine Überbestimmung, beispielsweise durch Mittelung, vorteilhaft zur Reduzierung von Messfehlern genutzt werden kann:

$$T_{RA} = T_{RA}(_A\boldsymbol{p}_1, _A\boldsymbol{p}_2, _A\boldsymbol{p}_3),$$

$$T_{RB} = T_{RB}(_B\boldsymbol{p}_1, _B\boldsymbol{p}_2, _B\boldsymbol{p}_3),$$

$$T_{RC} = T_{RC}(_C\boldsymbol{p}_1, _C\boldsymbol{p}_2, _C\boldsymbol{p}_3),$$

Somit können in einem Schritt S20 aus den in Schritt S10 erfassten Markern $P_1$ bis $P_3$ die Transformationen zwischen den lokalen Koordinatensystemen (A), (B) und (C) bestimmt und das Messgerät 1 kalibriert werden:

$$T_{AB} = T_{AR}\,T_{RB}$$

$$T_{AC} = T_{AR}\,T_{RC}$$

wobei $T_{AR}$ aus $T_{RA}$ bestimmt werden kann. Entsprechend ist darauf hinzuweisen, dass diese Transformationen nur exemplarisch zu verstehen sind - selbstverständlich kann beispielsweise auch umgekehrt jeweils die Transformation $T_{BA}$ etc. verwendet werden.

In einem Schritt S30 kann diese Kalibrierung dadurch überprüft werden, dass ein oder mehrere Marker eines Referenzkörpers durch verschiedene Lasertracker erfasst und die Erfassungen miteinander verglichen werden:

$$\varDelta = T_{AB}\,_B\boldsymbol{p}_i - {_A}\boldsymbol{p}_i,$$

$$\varDelta = T_{AC}\,_C\boldsymbol{p}_i - {_A}\boldsymbol{p}_i, i=1, 2, \ldots$$

wobei $\varDelta$ den Kalibrierungsfehler beschreibt. Auf Basis dieser Überprüfung kann die Kalibrierung in Schritt S30 auch korrigiert werden.

Nachfolgend wird anhand der Fig. 4 ein Verfahren zur dynamischen 6D-Messung eines Roboters beschrieben, wie es mittels der Messanordnung, insbesondere durch den Controller 1.2 durchgeführt wird:

Hierzu werden in einem Schritt S110 die Lasertracker A, B und C auf den robotergeführten Referenzkörper 2 ausgerichtet, so dass jeder Lasertracker einen eigenen Marker erfassen kann. Hierzu können sich insbesondere zwei Lasertracker, beispielsweise die Lasertracker B und C, an dem dritten Lasertracker orientieren, sobald dieser seinen Marker gefunden hat. Dies erleichtert die Suche nach Markern.

Weist das Messgerät 1 einen Freiheitsgrad $\alpha'_1$ gegenüber der Roboterumgebung auf, kann es in diesem Freiheitsgrad auf den Referenzkörper 2 ausgerichtet werden und so ebenfalls die (Fein)Suche insbesondere der Lasertracker B und C erleichtern.

Dann wird in einem Schritt S120 gleichzeitig, d.h. im Wesentlichen zum selben oder zu nur geringfügig voneinander abweichenden Messzeitpunkten $t_M$, von jedem Lasertracker A, B und C je einer der Marker $P_1$ bis $P_3$ erfasst:

$$_A\boldsymbol{p}_1(t_M), _B\boldsymbol{p}_2(t_M), _C\boldsymbol{p}_3(t_M).$$

Hieraus kann in Schritt S130 die Transformation $T_{RA}$ bestimmt werden:

$$T_{RA}(t_M) = T_{RA}(_A\boldsymbol{p}_1(t_M), T_{AB}\,_B\boldsymbol{p}_2(t_M), T_{AC}\,_C\boldsymbol{p}_3(t_M)).$$

Diese beschreibt die Lage und Orientierung eines, insbesondere durch die Marker $P_1$ bis $P_3$ definierten, Referenzkoordinatensystems bzw. des Referenzkörpers 2 und des Koordinatensystems (A) des Erfassungsmittels A bzw. des Messgeräts 1 relativ zueinander und somit auch die Lage und Orientierung des Roboters 3 in seiner Umgebung. Wie vorstehend ausgeführt, kann der Roboter natürlich gleichermaßen in einer anderen mathematischen Implementierung vermessen werden, beispielsweise mit Bezug auf ein Koordinatensystem (B), (C) eines anderen Erfassungsmittels B bzw. C, in einer anderen Darstellung, beispielsweise mittels Quaternionen, und/oder als Transformation vom Referenz- in ein Erfassungsmittel-Koordinatensystem $T_{AR}$.

Wenn, wie vorstehend ausgeführt, der Drehfreiheitsgrad $\alpha_1$ entfällt, d.h. das Erfassungsmittel A 1D-kardanisch in dem gemeinsamen Gehäuse 1.1 drehbar ist, wird dieses gemeinsame Gehäuse um seinen Drehfreiheitsgrad $\alpha'_1$ gedreht, um zusammen mit dem Drehfreiheitsgrad $\alpha_2$ das Erfassungsmittel A auf die Marker auszurichten. Hierdurch werden vorteilhaft die Erfassungsmittel B, C mit vorpositioniert, die Transformationen

$$T_{AB} = T_{AB}(\alpha_2, \beta_1, \beta_2),$$

$$T_{AC} = T_{AC}(\alpha_2, \gamma_1, \gamma_2),$$

können präziser bestimmt werden. Auch bei einem 2D-kardanischen Erfassungsmittel A kann der Drehfreiheitsgrad $\alpha'_1$ des gemeinsamen Gehäuses 1.1 vorteilhaft den Erfassungsraum des Messgeräts 1 vergrößern, wobei dieser Drehfreiheitsgrad $\alpha'_1$ nicht so schnell aktuiert werden muss wie die Drehfreiheitsgrade der Erfassungsmittel A, B, C selber.

Bezugszeichenliste

| | |
|---|---|
| 1 | Messgerät |
| 1.1 | gemeinsames Gehäuse |
| 1.2 | gemeinsamer Controller (Steuermittel) |
| 2 | robotergeführter Referenzkörper |
| 3 | Roboter |
| A, B, C | Erfassungsmittel |
| (A), (B), (C) | Koordinatensystem des Erfassungsmittels A, B, C |
| C1 | optisches Sende- und/oder Empfangsmittel |
| C2 | Rahmen |
| $P_1,..., P_9$ | Marker |

**Patentansprüche**

1. Messgerät (1) mit

    - wenigstens drei Erfassungsmitteln (A, B, C) zur Erfassung einer Position eines passiven Markers ($P_1,..., P_9$) und mit
    - einem gemeinsames Steuermittel (1.2) zum Steuern dieser Erfassungsmittel,

    **dadurch gekennzeichnet, dass** die drei Erfassungsmitteln (A, B, C) zur Erfassung einer Position eines passiven Markers ($P_1,..., P_9$) in einem gemeinsamen Gehäuse (1.1) des Messgeräts um mehrere, vorzugsweise wenigstens zwei, Achsen drehbar gelagert und um diese Achsen, insbesondere motorisch, verstellbar sind, wobei wenigstens zwei Erfassungsmittel 2D-kardanisch in dem Gehäuse drehbar sind.

2. Messgerät (1) nach dem vorhergehenden Anspruch, **dadurch gekennzeichnet, dass** wenigstens ein Erfassungsmittel ein optisches Sende- und/oder Empfangsmittel (C1), insbesondere einen Lasertracker, aufweist.

3. Messgerät (1) nach einem der vorhergehenden Ansprüche, **dadurch gekennzeichnet, dass** das Gehäuse um wenigstens eine Gehäusedrehachse ($\alpha'_1$) gegen eine Gehäuselagerung drehbar ist.

4. Messgerät (1) nach einem der vorhergehenden Ansprüche, **dadurch gekennzeichnet, dass** wenigstens eine Drehachse eines Erfassungsmittels und eine Drehachse eines weiteren Erfassungsmittels und/oder eine Gehäusedrehachse parallel sind, insbesondere miteinander fluchten.

5. Messgerät (1) nach einem der vorhergehenden Ansprüche, **dadurch gekennzeichnet, dass** das gemeinsame Steuermittel eine einzige Verarbeitungs-, insbesondere Rechner-, vorzugsweise Multirechnereinheit (1.2) zum, insbesondere synchronen, vorzugsweise vollsynchronen Steuern der Erfassungsmittel des Messgeräts aufweist.

**6.** Robotergeführte Messanordnung, die

- ein Messgerät (1) nach einem der vorhergehenden Ansprüche;
- einen Referenzkörper (2) mit wenigstens drei nicht kollinearen, durch die Erfassungsmittel erfassbaren passiven Marker ($P_1$,..., $P_9$); und
- einen Roboter (3) aufweist, der eines von dem Messgerät und dem Referenzkörper führt.

**7.** Robotergeführte Messanordnung nach dem vorhergehenden Anspruch, **dadurch gekennzeichnet, dass** der Referenzkörper derart mit Markern bestückt ist, dass aus jeder Raumrichtung wenigstens drei Marker sichtbar sind.

**8.** Verfahren zur dynamischen 6D-Vermessung eines Roboters mittels einer robotergeführten Messanordnung nach einem der vorhergehenden Ansprüche, **dadurch gekennzeichnet, dass** zu wenigstens einem Messzeitpunkt ($t_M$) wenigstens drei Erfassungsmittel (A, B, C) des Messgeräts (1) je einen passiven Marker ($P_1$ $P_9$) des Referenzkörpers (2) erfassen (S120).

**9.** Verfahren nach dem vorhergehenden Anspruch, **dadurch gekennzeichnet, dass** zu wenigstens zwei Messzeitpunkten, die höchstens um 2 ms, insbesondere um höchstens 1 ms auseinanderliegen, wenigstens drei Erfassungsmittel des Messgeräts je einen passiven Marker des Referenzkörpers erfassen (S120).

**10.** Verfahren zur Kalibrierung einer robotergeführten Messanordnung nach einem der vorhergehenden Ansprüche, **dadurch gekennzeichnet, dass** wenigstens drei Erfassungsmittel (A, B, C) des Messgeräts (1) je wenigstens drei passive Marker ($P_1$,..., $P_9$) des Referenzkörpers erfassen (S10).

**11.** Verfahren nach dem vorhergehenden Anspruch, **dadurch gekennzeichnet, dass** anschließend wenigstens zwei Erfassungsmittel des Messgeräts denselben passive Marker des Referenzkörpers erfassen und die Kalibrierung auf Basis dieser Erfassungen überprüft, insbesondere korrigiert wird (S30).

**Claims**

**1.** A measuring device (1) comprising

- at least three detection means (A, B, C) for detecting a position of a passive marker ($P_1$, ..., $P_9$) and having
- a common control means (1.2) for controlling said detection means, **characterised in that** the three detection means (A, B, C) for detecting a position of a passive marker ($P_1$, ..., $P_9$) are rotatably supported, in a common housing (1.1) of the measuring device, about a plurality of axes, preferably at least two axes, and are adjustable about these axes, in particular by a motor, wherein at least two detection means are rotatable in a 2D gimballed fashion in the housing.

**2.** The measuring device (1) according to the preceding claim, **characterised in that** at least one detection means comprises an optical transmitting and/or receiving means (C1), in particular a laser tracker.

**3.** The measuring device (1) according to any one of the preceding claims, **characterised in that** the housing is rotatable about at least one housing axis of rotation ($\alpha'_1$) against a housing support.

**4.** The measuring device (1) according to any one of the preceding claims, **characterised in that** at least one axis of rotation of a detection means and an axis of rotation of a further detection means and/or a housing axis of rotation are parallel with one another, in particular aligned with one another.

**5.** The measuring device (1) according to any one of the preceding claims, **characterised in that** the common control means comprises a single processing unit, in particular a computer unit, preferably a multicomputer unit (1.2), for control, in particular synchronous control, preferably fully synchronous control, of the detection means of the measuring device.

**6.** A robot-guided measuring arrangement which comprises

- a measuring device (1) according to any one of the preceding claims;
- a reference body (2) comprising at least three non-collinear passive markers ($P_1$, ..., $P_9$) which are detectable

by the detection means; and
- a robot (3) which guides one of the measuring device and the reference body.

7. The robot-guided measuring arrangement according to the preceding claim, **characterised in that** the reference body is fitted with markers in such a way that at least three markers are visible from each spatial direction.

8. A method for dynamic 6D measurement of a robot by means of a robot-guided measuring arrangement according to any one of the preceding claims, **characterised in that** at least three detection means (A, B, C) of the measuring device (1) each detect (S120) a passive marker ($P_1$, ..., $P_9$) of the reference body (2) at at least one measurement point in time ($t_M$).

9. The method according to the preceding claim, **characterised in that** at least three detection means of the measuring device each detect (S120) a passive marker of the reference body at at least two measurement points in time which are separated by at most 2 ms, in particular by at most 1 ms.

10. A method of calibrating a robot-guided measuring arrangement according to any one of the preceding claims, **characterised in that** at least three detection means (A, B, C) of the measuring device (1) each detect (S10) at least three passive markers ($P_1$, ..., $P_9$) of the reference body.

11. The method according to the preceding claim, **characterised in that** subsequently at least two detection means of the measuring device detect the same passive marker of the reference body and the calibration is checked, in particular corrected (S30), on the basis of these detections.

## Revendications

1. Appareil de mesure (1) avec

   - au moins trois moyens de détection (A, B, C) pour la détection d'une position d'un repère passif ($P_1$, ..., $P_9$) et avec
   - un moyen de commande commun (1.2) pour la commande de ces moyens de détection,

   **caractérisé en ce que** les trois moyens de détection (A, B, C) pour la détection d'une position d'un repère passif ($P_1$, ..., $P_9$) sont logés de manière rotative autour de plusieurs, de préférence au moins deux, axes dans un boîtier commun (1.1) de l'appareil de mesure et sont déplaçables, en particulier par moteur, autour de ces axes, dans lequel au moins deux moyens de détection sont rotatifs par cardan 2D dans le boîtier.

2. Appareil de mesure (1) selon la revendication précédente, **caractérisé en ce qu'**au moins un moyen de détection présente un moyen d'émission et/ou de réception optique (C1), en particulier un suiveur laser.

3. Appareil de mesure (1) selon l'une quelconque des revendications précédentes, **caractérisé en ce que** le boîtier est rotatif autour d'au moins un axe de rotation de boîtier ($\alpha'1$) contre un support de boîtier.

4. Appareil de mesure (1) selon l'une quelconque des revendications précédentes, **caractérisé en ce qu'**au moins un axe de rotation d'un moyen de détection et un axe de rotation d'un autre moyen de détection et/ou un axe de rotation de boîtier sont parallèles, en particulier alignés l'un avec l'autre.

5. Appareil de mesure (1) selon l'une quelconque des revendications précédentes, **caractérisé en ce que** le moyen de commande commun présente une seule unité de traitement, en particulier unité de calcul, de préférence unité multi-ordinateur (1.2) pour la commande, en particulier synchrone, de préférence entièrement synchrone, des moyens de détection de l'appareil de mesure.

6. Dispositif de mesure guidé par un robot, qui présente

   - un appareil de mesure (1) selon l'une quelconque des revendications précédentes ;
   - un corps de référence (2) avec au moins trois repères passifs ($P_1$, ..., $P_9$) non colinéaires, pouvant être détectés par les moyens de détection ; et
   - un robot (3), qui guide un de l'appareil de mesure et du corps de référence.

**7.** Dispositif de mesure guidé par un robot selon la revendication précédente, **caractérisé en ce que** le corps de référence est doté de repères de sorte qu'au moins trois repères sont visibles depuis chaque direction spatiale.

**8.** Procédé de mesure 6D dynamique d'un robot au moyen d'un dispositif de mesure guidé par un robot selon l'une quelconque des revendications précédentes, **caractérisé en ce qu'**à au moins un moment de mesure ($t_M$), au moins trois moyens de détection (A, B, C) de l'appareil de mesure (1) détectent respectivement un repère passif ($P_1$, ..., $P_9$) du corps de référence (2) (S120).

**9.** Procédé selon la revendication précédente, **caractérisé en ce qu'**à au moins deux moments de mesure, qui sont séparés l'un de l'autre au maximum de 2 ms, en particulier au maximum de 1 ms, au moins trois moyens de détection de l'appareil de mesure détectent respectivement un repère passif du corps de référence (S120).

**10.** Procédé de calibrage d'un dispositif de mesure guidé par un robot selon l'une quelconque des revendications précédentes, **caractérisé en ce qu'**au moins trois moyens de détection (A, B, C) de l'appareil de mesure (1) détectent respectivement au moins trois repères passifs ($P_1$, ..., $P_9$) du corps de référence (S10).

**11.** Procédé selon la revendication précédente, **caractérisé en ce qu'**ensuite au moins deux moyens de détection de l'appareil de mesure détectent le même repère passif du corps de référence et le calibrage est vérifié, en particulier corrigé, sur la base de ces détections (S30).

Fig. 1

EP 2 874 788 B1

Fig. 2

1.2

1

1.1

B

A

C(1)

Fig. 3

S10

S20

S30

Fig. 4

S110

S120

S130

EP 2 874 788 B1

EP 2 874 788 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008107715 A2
- US 4621926 A
- US 20100017178 A1